Europäisches Patentamt

European Patent Office

Office européen des brevets

(19)

(11) **EP 0 434 569 B1**

(12) **FASCICULE DE BREVET EUROPEEN**

(45) Date de publication et mention
de la délivrance du brevet:
**24.07.1996 Bulletin 1996/30**

(51) Int Cl.6: **G05D 1/02**

(21) Numéro de dépôt: **90403722.3**

(22) Date de dépôt: **20.12.1990**

(54) **Procédé de recalage sur une trajectoire théorique pour un véhicule en modifiant la courbure de la trajectoire réelle**

Verfahren zur Neueinstellung eines Fahrzeuges auf eine theorethische Trajektorie durch Änderung der Krümmung der reellen Trajektorie

Process for repositioning a vehicle on a theoretical trajectory in modifying the curve of the real trajectory

(84) Etats contractants désignés:
**CH DE ES GB IT LI SE**

(30) Priorité: **22.12.1989 FR 8917105**

(43) Date de publication de la demande:
**26.06.1991 Bulletin 1991/26**

(73) Titulaire: **COMMISSARIAT A L'ENERGIE ATOMIQUE**
**75015 Paris (FR)**

(72) Inventeurs:
• **Detriche, Jean-Marie**
**F-78590 Noisy Le Roi (FR)**

• **Micaelli, Alain**
**F-92260 Fontenay Aux Roses (FR)**

(74) Mandataire: **Poulin, Gérard et al**
**Société BREVATOME**
**25, rue de Ponthieu**
**75008 Paris (FR)**

(56) Documents cités:
EP-A- 0 049 697          EP-A- 0 252 219
EP-A- 0 273 976          US-A- 3 757 887
US-A- 4 852 677

• PATENT ABSTRACTS OF JAPAN vol. 11, no. 103 (P- 562)(2550), 2 avril 1987; & JP - A - 61253513 (HITACHI) 11.11.1986

EP 0 434 569 B1

## Description

La présente invention se rapporte à un procédé de recalage sur une trajectoire théorique pour un véhicule, notamment robotisé, qui consiste à modifier la courbure de la trajectoire réelle.

On connaît déjà plusieurs procédés destinés à ramener un véhicule sur une trajectoire de consigne ou, en d'autres termes, à faire coïncider une trajectoire que le véhicule suit réellement avec une trajectoire théorique.

D'une façon générale, la trajectoire théorique est modélisée par une succession de segments rectilignes ou courbes à rayon de courbure constant ou non qui se joignent en des points de localisation ou de repérage identifiés grâce des balises. Le brevet français de numéro d'enregistrement 89 08049 décrit un certain nombre de moyens qui peuvent faire office de balises, en particulier des émetteurs d'ondes radiophoniques, des poteaux réfléchissants ou des aimants enterrés dans le sol. Quel que soit le mode de localisation adopté, des repérages de la position absolue du véhicule, appelés aussi localisations et qui permettent de déduire l'écart entre la position réelle du véhicule et le point de localisation, sont effectuées par des capteurs appropriés du véhicule quand ce dernier passe près de ces points de localisation.

Un procédé connu de recalage consiste, une fois un écart déterminé, à calculer un tronçon de ralliement à la trajectoire théorique qui aboutit à un des points de localisation suivants de celle-ci. Pour cela, les coordonnées d'un certain nombre de points intermédiaires entre lesquels on décompose le tronçon de ralliement sont calculées. Si on veut éviter des variations trop brusques de cap du véhicule et converger assez rapidement vers la trajectoire théorique, le nombre des points intermédiaires et donc le volume de calcul doit être considérablement accru, ce qui peut nécessiter un arrêt temporaire du véhicule.

Un autre procédé consiste, une fois la localisation faite et l'écart avec le point de localisation calculé, à faire suivre au véhicule un tronçon de raccordement à ce même point de localisation et non à un des points suivants. Dans certains cas, cette méthode implique des déplacements transversaux du véhicule qui ne sont pas toujours possibles ou seulement avec une grande difficulté. Un exemple est donné par US-A-4 857 677, où le tronçon de raccordement est un arc de cercle après lequel le véhicule est placé correctement en position et en orientation.

L'invention permet d'éviter ces inconvénients en offrant la possibilité de recaler le véhicule sur sa trajectoire théorique au moyen de trajectoires de ralliement faciles à parcourir, qu'il n'est pas nécessaire de calculer explicitement et qui convergent rapidement sur la trajectoire théorique. les seuls calculs nécessaires sont beaucoup plus simples et sont répartis sur toute la durée de parcours de la trajectoire de ralliement.

Sous sa forme la plus générale, le procédé consiste, quand un repérage de la position absolue du véhicule est effectué pour donner l'écart entre la position réelle du véhicule et la trajectoire théorique, à commander des modifications successives de la courbure de la trajectoire réelle suivant une formule mathématique qui est une fonction du cap instantané du véhicule et de la courbure instantanée de la trajectoire réelle pour infléchir cette dernière vers la trajectoire théorique.

Le véhicule est muni de capteurs de localisation utilisés pour les repérages de la position du véhicule et d'un capteur de cap. Ce capteur est un moyen de mesure directe ou un moyen de calcul permettant d'obtenir le cap du véhicule, par exemple par dérivation de sa position. La courbure de la trajectoire réelle peut s'apprécier de différentes manières selon la constitution du véhicule et selon son équipement en capteurs de localisation. Dans le cas d'un véhicule à roues motrices indépendantes et non orientables, elle s'évalue en fonction des vitesses différentes sur les roues motrices droite et gauche. On peut procéder de même avec un véhicule à chenilles. Dans le cas de roues braquables, il faudra mesurer leur orientation.

Les modifications successives de la courbure de la trajectoire peuvent être commandées suivant un échantillonnage temporel ou spatial, c'est-à-dire à des intervalles déterminés de temps ou de distance parcourue. Dans ce dernier cas, on utilise des capteurs de déplacements normalement présents sur les robots tels que des roues codeuses roulant sur le sol. De tels capteurs n'ont pas une précision suffisante pour permettre de localiser le véhicule dans l'absolu, mais permettent cependant des évaluations suffisantes sur de courtes distances.

La trajectoire théorique peut être définie ou modélisée sous forme d'un cap théorique, d'une droite, d'un point de ralliement, d'un cercle ou d'un arc de cercle, ou d'une façon générale par une courbe quelconque définie sous forme d'un tableau de points. Selon le cas, les algorithmes de recalage qui constituent la mise en oeuvre effective de l'invention seront donc différents. Certains d'entre eux, qui forment la substance des revendications, vont maintenant être décrits à l'aide des figures suivantes annexées à titre illustratif et non limitatif:

- la figure 1 représente les deux méthodes décrites plus haut de l'art antérieur; et
- les figures 2 à 6 décrivent cinq réalisations particulières de l'invention.

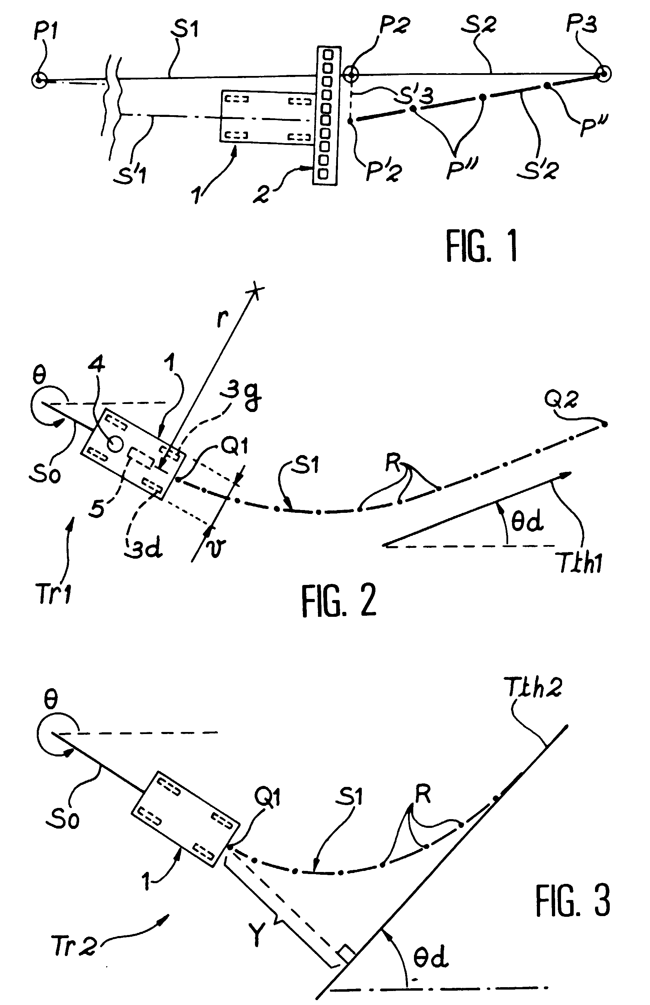

On a représenté sur la figure 1 deux tronçons $S_1$ et $S_2$ d'une trajectoire théorique qui s'étendent respectivement entre des points de localisation $P_1$, $P_2$ et $P_2$, $P_3$. Quand un véhicule 1 essaie de suivre cette trajectoire théorique, par exemple à partir du point $P_1$, il le fait avec une certaine erreur et parcourt en réalité un tronçon $S'_1$ joignant le point $P_1$

à un point $P'_2$ distant latéralement ou longitudinalement du point $P_2$. Quand le véhicule 1 arrive au point $P'_2$, ses capteurs de localisation lui permettent de calculer la distance entre les deux points $P_2$ et $P'_2$. Dans le cas où le point $P_2$ est matérialisé par une balise magnétique enterrée, le véhicule 1 est muni d'une rangée latérale 2 de capteurs magnétiques. On détermine alors l'écart des points $P_2$ et $P'_2$ en identifiant le capteur magnétique qui enregistre le champ le plus intense, ou en effectuant une interpolation en fonction des champs enregistrés par deux capteurs voisins passant de part et d'autre de la balise magnétique.

Une fois que la position du point $P'_2$ est déterminée, une première méthode connue consiste à déterminer un tronçon de ralliement $S'_2$ joignant les points $P'_2$ et $P_3$. Le véhicule 1 est orienté pour suivre ce segment de ralliement $S'_2$, qui est de même nature, rectiligne ou courbe, que le tronçon $S_2$, et qui est défini par un certain nombre de points de passage $P''$ dont les coordonnées sont calculées en fonction des points $P'_2$ et $P_3$.

Une seconde méthode connue consiste à faire parcourir au véhicule 1 un tronçon de raccordement $S'_3$ entre $P'_2$ et $P_2$ pour le faire repartir de ce dernier point. Le tronçon de raccordement $S'_3$ est parfois sensiblement à angle droit avec les tronçons $S'_1$ et $S_2$ et de courte longueur, si bien qu'il ne peut être parcouru directement mais seulement à la suite de manoeuvres compliquées du véhicule 1. Il peut même arriver que $P'_2$ soit devant $P_2$, ce qui impose un parcours vers l'arrière.

Sur la figure 2, on voit que le véhicule 1 est équipé d'une roue motrice gauche 3g et d'une roue motrice droite 3d, d'un capteur de cap 4 tel qu'une boussole et d'un capteur de déplacement relatif 5 tel qu'une roue codeuse. La trajectoire théorique est référencée $T_{th1}$ et se définit par un cap théorique θd par rapport à une référence angulaire fixe en pointillés. Le véhicule 1 vient d'arriver à un point $Q_1$ après avoir parcouru un segment $S_0$ de la trajectoire réelle $T_{r1}$, et le cap qu'il suit à ce moment est défini par rapport à la même référence angulaire par l'angle θ. Une localisation effectuée en ce point $Q_1$ consiste ici en une détermination du cap θ.

Le segment de ralliement $S_1$ que le véhicule 1 va maintenant suivre pour se raccorder à la trajectoire théorique $T_{th1}$, c'est-à-dire suivre le cap théorique θd, est maintenant défini par la formule (1) :

$$g = -\alpha(\theta d - \theta) - \beta c,$$

où α et β sont des coefficients constants.

Dans cette formule, c représente la courbure instantanée de la trajectoire réelle et g une variation de courbure qui permet d'infléchir peu à peu la trajectoire réelle $T_{r1}$ vers la trajectoire théorique $T_{th1}$ ; l'adjectif "instantané" signifie ici "à l'instant considéré" et est appliqué à des grandeurs mathématiques dont la valeur est destinée à varier. Plus exactement, si on désigne par s l'abscisse curviligne parcourue sur la trajectoire réelle $T_{r1}$, c peut être définie mathématiquement par:

$$c = \frac{d\theta}{ds} \text{ et } g = \frac{d^2\theta}{ds^2}.$$

En pratique, la courbure c peut être évaluée à l'aide de la commande des organes locomoteurs du véhicule 1. Dans le cas de roues 3 roulant sans glisser sur le sol, si on appelle r le rayon de courbure instantané de la trajectoire $T_{r1}$ et v la voie du véhicule 3, ωg et ωd les vitesses angulaires des essieux des roues 3g et 3d qui peuvent être facilement mesurées par des tachymètres, le rayon de courbure r peut s'évaluer par la formule:

$$\frac{r - \frac{v}{2}}{r + \frac{v}{2}} = \frac{\omega g}{\omega d}$$

avec les notations de la figure 2. Or, r est l'inverse de c.

Le segment de ralliement $S_1$ est donc créé en effectuant, en un certain nombre de points R qui se succèdent sur ce segment $S_1$, une évaluation de la courbure c, une lecture du cap θ et une modification de la courbure c instantanée à l'aide de la formule (1) en modifiant, dans le cas considéré, les vitesses ωg et ωd. Une des vitesses peut être accrue et l'autre diminuée de manière à maintenir la vitesse moyenne du véhicule 1 constante. Ce procédé est poursuivi jusqu'au point de localisation suivant $Q_2$, où de nouveaux calculs peuvent être repris si le cap théorique a changé. Les points R se succèdent à des intervalles égaux de distance ou de temps de parcours définis à l'avance en fonction des caractéristiques du véhicule 1 et de la trajectoire théorique $T_{th1}$, mais leur position n'est pas calculée et reste inconnue. α et β sont des coefficients constants déterminés par l'utilisateur en fonction notamment des possibilités cinématiques du véhicule.

La figure 3 représente le cas où la trajectoire théorique est une droite $T_{th2}$ qui doit être parcourue dans un sens correspondant à un cap θd. Le procédé de recalage ressemble au précédent avec cette différence qu'il faut tenir compte de la distance Y entre le point où se trouve le véhicule 1, tel que $Q_1$, et la droite $T_{th2}$.

La formule utilisée est la formule (2):

$$g = \frac{1}{\cos(\theta - \theta d)} \left\{ -\alpha \, Y - \beta \sin(\theta - \theta d) - \gamma c.\cos(\theta - \theta d) + c^2 \sin(\theta - \theta d) \right\},$$

ou $\alpha$, $\beta$ et $\gamma$ sont des coefficients constants et où Y désigne donc la distance instantanée du véhicule 1 à la droite $T_{th2}$ à chaque changement de courbure. La localisation fournit au véhicule 1 son cap instantané $\theta$ au point de localisation $Q_1$ et la distance Y de ce point à la droite $T_{th2}$.

Une procédure particulière est mise en oeuvre pour éviter l'indétermination lorsque $\cos(\theta - \theta d)$ est proche de zéro. On distingue alors deux cas en fonction de Y. Si Y est supérieure à un seuil, c'est-à-dire si le véhicule 1 est éloigné de la droite $T_{th2}$, le véhicule 1 est piloté temporairement dans la direction d'un cap perpendiculaire à la droite $T_{th2}$. Quand Y devient inférieure au seuil fixé, le véhicule 1 est désormais orienté suivant un cap parallèle à la droite $T_{th2}$, ce qui infléchit la direction du véhicule 1 et rend $\cos(\theta - \theta d)$ non nul. On peut alors revenir au recalage sur la droite $T_{th2}$ par la formule (2). Les distances Y successives peuvent être évaluées simplement par les indications des capteurs relatifs de cap 4 et de déplacement 5 en fonction de la distance précédemment calculée et du déplacement du véhicule 1 depuis le point précédent correspondant, sans qu'il soit nécessaire de calculer au préalable la position exacte des points R.

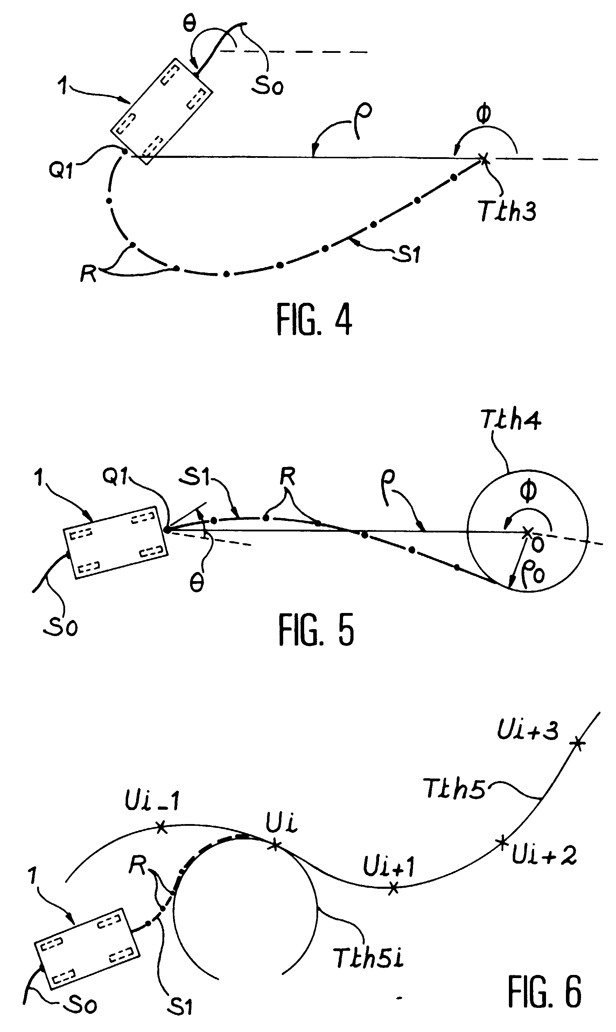

La figure 4 représente un autre cas d'application de l'invention où la trajectoire théorique est ici un point $T_{th3}$. $\rho$ et $\phi$ désignent les coordonnées polaires du véhicule 1 par rapport au point $T_{th3}$, et on utilise la formule (3) suivante pour obtenir la convergence souhaitée du tronçon de ralliement $S_1$ :

$$g = -\alpha(\theta - \phi + \pi) - \beta[c - \frac{1}{\rho}\sin(\theta - \phi)] + \frac{c}{\rho}\cos(\theta - \phi) - \frac{1}{\rho^2}\sin 2(\theta - \phi)$$

où $\alpha$ et $\beta$ sont des coefficients constants. Comme on le représente, l'application de cette formule (3) permet tout d'abord d'orienter le véhicule 1 vers le point $T_{th3}$, puis de le rapprocher par un trajet sensiblement rectiligne. Les coordonnées $\rho$ et $\phi$ du point $Q_1$ sont fournies par la localisation et celles des points R calculées à l'aide des indications des capteurs de cap 4 et de déplacement 5, comme pour le cas précédent.

La figure 5 représente un nouveau cas envisageable dans lequel la trajectoire théorique $T_{th4}$ est un cercle de centre 0 et de rayon $\rho_0$. Comme précédemment, $\rho$ et $\phi$ désignent les coordonnées polaires du véhicule 1 par rapport au centre 0 ; on met en oeuvre la formule (4), où $\alpha$, $\beta$ et $\gamma$ sont des coefficients constants, pour amener le véhicule 1 sur le cercle $T_{th4}$ :

$$g = \frac{1}{\sin(\theta - \phi)} \left\{ \alpha(\rho - \rho_0) + \beta \cos(\theta - \phi) + \gamma \left[ \frac{1}{\rho}\sin 2(\theta - \phi) - c.\sin(\theta - \phi) \right] - \cos(\theta - \phi) \left[ c^2 - 3\frac{c}{\rho}\sin(\theta - \phi) + \frac{3}{\rho^2}\sin 2(\theta - \phi) \right] \right\}.$$

Ici encore, une singularité peut apparaître lorsque $\sin(\theta - \phi)$ est égal à zéro. Ce cas correspond au véhicule 1 dirigé vers le centre 0. On remplace l'asservissement sur le cercle $T_{th4}$ par l'asservissement au point 0 en appliquant la formule (3). En même temps, on examine l'évolution de la quantité $(\rho - \rho_0)$ qui correspond à la distance du véhicule 1 au cercle $T_{th4}$. Quand cette valeur passe au-dessous d'un seuil, on utilise désormais un asservissement sur une direction tangente au cercle de manière à infléchir le tronçon de ralliement $S_1$. Quand $\sin(\theta - \phi)$ est devenu non nul, on revient à l'asservissement sur le cercle $T_{th4}$.

L'emploi de la formule (4) peut être généralisé à des trajectoires théoriques $T_{th5}$ de forme quelconque, définies par exemple par les coordonnées de certains de leurs points U enregistrées dans le véhicule en tant que tableaux. La figure 6 représente le mode de recalage utilisé alors: s'il s'agit de ramener le véhicule 1 sur un point $U_i$ de la trajectoire théorique $T_{th5}$, on calcule l'équation du cercle osculateur $T_{th5i}$ à la courbe $T_{th5}$ au point $U_i$, c'est-à-dire du cercle tangent à la trajectoire $T_{th5}$ en ce point et dont le rayon correspond au rayon de courbure de la trajectoire $T_{th5}$ en ce même point. Une convergence rapide sur la trajectoire théorique $T_{th5}$ est généralement obtenue en pratique. Le procédé est poursuivi jusqu'à proximité du point $U_i$ objectif, après quoi on calcule le cercle osculateur à la trajectoire au point suivant $U_{i+1}$ et on recommence le processus de recalage avec ce nouveau cercle.

Dans tous ces cas, l'invention peut être mise en oeuvre d'autres manières, mais les formules indiquées permettent une convergence rapide et sûre.

**Revendications**

1. Procédé de recalage sur une trajectoire théorique pour un véhicule équipé d'un capteur de cap (4) et parcourant une trajectoire réelle ($T_r$), comprenant des localisations périodiques (Q) de la position du véhicule (1) sur la trajectoire réelle, dans lequel la trajectoire théorique ($T_{th1}$) est définie par un cap théorique ($\theta d$), caractérisé en ce qu'il consiste à appliquer à la courbure instantanée (c) de la trajectoire réelle des modifications successives de courbure (g) en fonction du cap instantané ($\theta$) du véhicule (1) et de la courbure instantanée (c) selon la formule $g = -\alpha(\theta d-\theta) - \beta c$, où $\alpha$ et $\beta$ sont des coefficients constants.

2. Procédé de recalage sur une trajectoire théorique pour un véhicule équipé d'un capteur de cap (4) et parcourant une trajectoire réelle ($T_r$), comprenant des localisations périodiques (Q) de la position du véhicule (1) sur la trajectoire réelle, dans lequel la trajectoire théorique est définie par une droite ($T_{th2}$) de direction ($\theta d$), caractérisé en ce qu'il consiste à appliquer à la courbure instantanée (c) de la trajectoire réelle des modifications successives de courbure (g) en fonction du cap instantané ($\theta$) du véhicule, de la courbure instantanée (c) et de la distance instantanée (Y) du véhicule à la droite selon la formule :

$$g = \frac{1}{\cos(\theta-\theta d)} \{-\alpha\, Y - \beta \sin(\theta-\theta d) - \gamma c.\cos(\theta-\theta d) + c^2 \sin(\theta-\theta d)\},$$

où $\alpha$, $\beta$ et $\gamma$ sont des coefficients constants.

3. Procédé de recalage sur une trajectoire théorique pour un véhicule équipé d'un capteur de cap (4) et parcourant une trajectoire réelle ($T_r$), comprenant des localisations périodiques (Q) de la position du véhicule (1) sur la trajectoire réelle, dans lequel la trajectoire théorique est définie par un point ($T_{th3}$), caractérisé en ce qu'il consiste à appliquer à la courbure instantanée (c) de la trajectoire réelle des modifications successives de courbure (g) en fonction du cap instantanée ($\theta$) du véhicule, de la courbure instantanée (c) et de la position instantanée du véhicule par rapport au point, exprimée en coordonnées polaires ($\rho$ et $\phi$), selon la formule :

$$g = -\alpha(\theta - \phi + \pi) - \beta\left[c - \frac{1}{\rho}\sin(\theta - \phi)\right] + \frac{c}{\rho}\cos(\theta - \phi) - \frac{1}{\rho^2}\sin 2(\theta - \phi)$$

où $\alpha$ et $\beta$ sont des coefficients constants.

4. Procédé de recalage sur une trajectoire théorique pour un véhicule équipé d'un capteur de cap (4) et parcourant une trajectoire réelle ($T_r$), comprenant des localisations périodiques (Q) de la position du véhicule (1) sur la trajectoire réelle, dans lequel la trajectoire théorique est un cercle ($T_{th4}$), caractérisé en ce qu'il consiste à appliquer à la courbure instantanée (c) de la trajectoire réelle des modifications successives de courbure (g) en fonction du cap instantané ($\theta$) du véhicule, du rayon ($\rho_0$) du cercle, de la courbure instantanée (c) et de la position instantanée du véhicule par rapport au centre du cercle exprimée en coordonnées polaires ($\rho$ et $\phi$) selon la formule :

$$g = \frac{1}{\sin(\theta - \phi)}\left\{\alpha(\rho - \rho_0) + \cos(\theta - \phi) + \gamma\left[\frac{1}{\rho}\sin 2(\theta - \phi) - c.\sin(\theta - \phi)\right] - \cos(\theta - \phi)\left[c^2 - 3\frac{c}{\rho}\sin(\theta - \phi) + \frac{3}{\rho^2}\sin 2(\theta - \phi)\right]\right\},$$

où $\alpha$, $\beta$ et $\gamma$ sont des coefficients constants.

5. Procédé de recalage sur une trajectoire théorique pour un véhicule selon la revendication 4, caractérisé en ce que le cercle ($T_{th5i}$) est obtenu à la suite d'une étape préliminaire de modélisation d'une autre trajectoire théorique ($T_{th5}$), effectuée après la localisation et avant les modifications de courbure, le cercle étant un cercle osculateur à cette autre trajectoire théorique.

**Claims**

1. Process for relocking on a theoretical trajectory for a vehicle equipped with a heading sensor (4) and covering a real trajectory ($T_r$), consisting of periodic localizations (Q) of the position of the vehicle (1) on the real trajectory, in which the theoretical trajectory ($T_{th1}$) is defined by a theoretical heading ($\theta d$), characterized in that it consists of applying to the instantaneous curvature (c) of the real trajectory successive curvature modifications (g) as a function of the instantaneous heading ($\theta$) of the vehicle (1) and of the instantaneous curvature (c) in accordance with the formula g = - $\alpha(\theta d-\theta)$ - $\beta c$, in which $\alpha$ and $\beta$ are constant coefficients.

2. Process for relocking on a theoretical trajectory for a vehicle equipped with a heading sensor (4) and covering a real trajectory ($T_r$), consisting of periodic localizations (Q) of the position of the vehicle (1) on the real trajectory, in which the theoretical trajectory is defined by a straight line ($T_{th2}$) of direction ($\theta d$), characterized in that it consists of applying to the instantaneous curvature (c) of the real trajectory successive curvature modifications (g) as a function of the instantaneous heading ($\theta$) of the vehicle, the instantaneous curvature (c) and the instantaneous distance (Y) of the vehicle from the line in accordance with the formula:

$$g = \frac{1}{\cos(\theta-\theta d)} - \alpha Y - \beta \sin(\theta-\theta d) - \gamma c.\cos(\theta-\theta d) + c^2 \sin(\theta-\theta d)$$

in which $\alpha$, $\beta$ and $\gamma$ are constant coefficients.

3. Process for relocking on a theoretical trajectory for a vehicle equipped with a heading sensor (4) and covering a real trajectory ($T_r$), consisting of periodic localizations (Q) of the position of the vehicle (1) on the real trajectory, in which the theoretical trajectory is defined by a point ($T_{th3}$), characterized in that it consists of applying to the instantaneous curvature (c) of the real trajectory successive curvature modifications (g) as a function of the instantaneous heading ($\theta$) of the vehicle, the instantaneous curvature (c) and the instantaneous position of the vehicle relative to the point, expressed in polar coordinates ($\rho$ and $\phi$) according to the formula:

$$g = -\alpha(\theta - \phi + \pi) - \beta\left[c - \frac{1}{\rho}\sin(\theta - \phi)\right] \div \frac{c}{\rho}\cos(\theta - \phi) - \frac{1}{\rho^2}\sin 2(\theta - \phi)$$

in which $\alpha$ and $\beta$ are constant coefficients.

4. Process for relocking on a theoretical trajectory for a vehicle equipped with a heading sensor (4) and covering a real trajectory ($T_r$), consisting of periodic localizations (Q) of the position of the vehicle (I') on the real trajectory, in which the theoretical trajectory is a circle ($T_{th4}$), characterized in that it consists of applying to the instantaneous curvature (c) of the real trajectory successive curvature modifications (g) as a function of the instantaneous heading ($\theta$) of the vehicle, the radius ($\rho_0$) of the circle, the instantaneous curvature (c) and the instantaneous position of the vehicle relative to the centre of the circle expressed in polar coordinates ($\rho$ and $\phi$) according to the formula:

$$g = \frac{1}{\sin(\theta - \phi)}\left\{\alpha(\rho - \rho_0) + \cos(\theta - \phi) - \left[\frac{1}{\rho}\sin 2(\theta - \phi) - c\sin(\theta - \phi)\right] - \cos(\theta - \phi)\left[c^2 - \beta\frac{c}{\rho}\sin(\theta - \phi) - \frac{1}{\rho^2}\sin 2(\theta - \phi)\right]\right\}$$

in which $\alpha$, $\beta$ and $\gamma$ are constant coefficients.

5. Process for relocking on a theoretical trajectory for a vehicle according to claim 4, characterized in that the circle ($T_{th}z_5$) is obtained as a result of a preliminary stage of modelling another theoretical trajectory ($T_{th5}$) performed after the localization and prior to the curvature modifications, the circle being an osculating circle for said other theoretical trajectory.

## Patentansprüche

1. Verfahren zur Neueinstellung - auf eine theoretische Trajektorie bzw. einen theoretischen Weg - eines Fahrzeugs, ausgestattet mit einem Kurssensor (4) und einen realen Weg ($T_r$) durchfahrend, periodische Lokalisierungen (Q) der Position des Fahrzeugs (1) auf dem realen Weg umfassend, in dem der theoretische Weg ($T_{th1}$) definiert wird durch einen theoretischen Kurs ($\Theta d$), **dadurch gekennzeichnet,** daß es darin besteht, auf die momentane Krümmung (c) des realen Wegs aufeinanderfolgende Krümmungsänderungen (g) anzuwenden in Abhängigkeit vom momentanen Kurs ($\Theta$) des Fahrzeugs (1) und von der momentanen Krümmung (c) gemäß der Formel g = -$\alpha(\Theta d-\Theta)$ - $\beta c$, wo $\alpha$ und $\beta$ konstante Koeffizienten sind.

2. Verfahren zur Neueinstellung - auf einen theoretischen Weg - eines Fahrzeugs, ausgestattet mit einem Kurssensor (4) und einen realen Weg ($T_r$) durchfahrend, periodische Lokalisierungen (Q) der Position des Fahrzeugs (1) auf dem realen Weg umfassend, in dem der theoretische Weg definiert wird durch eine Gerade ($T_{th2}$) der Richtung ($\Theta d$),

**dadurch gekennzeichnet,** daß es darin besteht, auf die momentane Krümmung (c) des realen Wegs aufeinanderfolgende Krümmungsänderungen (g) anzuwenden in Abhängigeit vom momentanen Kurs ($\Theta$) des Fahrzeugs, von der momentanen Krummung (c) und von dem momentanen Abstand (Y) des Fahrzeugs von der Geraden gemäß der Formel:

$$g = \frac{1}{\cos(\theta - \theta d)} \{-\alpha\, Y - \beta \sin(\theta - \theta d) - \gamma c.\cos(\theta - \theta d) + c^2 \sin(\theta - \theta d)\},$$

wo $\alpha$, $\beta$ und $\gamma$ konstante Koeffizienten sind.

3. Verfahren zur Neueinstellung - auf einen theoretischen Weg - eines Fahrzeugs, ausgestattet mit einem Kurssensor (4) und einen realen Weg ($T_r$) durchfahrend, periodische Lokalisierungen (Q) der Position des Fahrzeugs (1) auf dem realen Weg umfassend, in dem der theoretische Weg definiert wird durch einen Punkt ($Tth_3$),
   **dadurch gekennzeichnet,** daß es darin besteht, auf die momentane Krümmung (c) des realen Wegs aufeinanderfolgende Krümmungsänderungen (g) anzuwenden in Abhängigkeit vom momentanen Kurs ($\Theta$) des Fahrzeugs, von der momentanen Krümmung (c) und von der momentanen position des Fahrzeugs in bezug auf den Punkt, ausgedrückt in polarkoordinaten, gemäß der Formel:

$$g = -\alpha(\theta - \phi + \pi) - \beta\left[c - \frac{1}{\rho}\sin(\theta - \phi)\right] + \frac{c}{\rho}\cos(\theta - \phi) - \frac{1}{\rho^2}\sin 2(\theta - \phi)$$

wo $\alpha$ und $\beta$ konstante Koeffizienten sind.

4. Verfahren zur Neueinstellung - auf einen theoretischen Weg - eines Fahrzeugs, ausgestattet mit einem Kurssensor (4) und einen realen Weg ($T_r$) durchfahrend, periodische Lokalisierungen (Q) der Position des Fahrzeugs (1) auf dem realen Weg umfassend, in dem der theoretische Weg definiert wird durch ein Kreis ($T_{th4}$),
   **dadurch gekennzeichnet,** daß es darin besteht, auf die momentane Krümmung (c) des realen Wegs aufeinanderfolgende Krümmungsänderungen (g) anzuwenden in Abhängigkeit vom momentanen Kurs ($\Theta$) des Fahrzeugs, des Radius $\rho_0$ des Kreises, von der momentanen Krümmung (c) und von der momentanen Position des Fahrzeugs in bezug auf den Mittelpunkt des Kreises, ausgedrückt in Polarkoordinaten ($\rho$ und $\phi$) gemäß der Formel:

$$g = \frac{1}{\sin(\Theta - \phi)} \{\alpha(\rho - o_0) + \cos(\Theta - \phi) + \gamma[\frac{1}{\rho}\sin 2(\Theta - \phi) - c.\sin(\Theta - \phi)]$$

$$- \cos(\Theta - \phi)[c^2 - 3\frac{c}{\rho}\sin(\Theta - \phi) + \frac{3}{\rho^2}\sin 2(\Theta - \phi)]\}.$$

wo $\alpha$, $\beta$ und $\gamma$ konstante Koeffizienten sind.

5. Verfahren zur Neueinstellung eines Fahrzeugs auf einen theoretischen Weg nach Anspruch 4,
   **dadurch gekennzeichnet,** daß der Kreis ($T_{th5i}$) erhalten wird in der Folge eines Modeling-Vorausschritts eines anderen theoretischen Wegs ($T_{th5}$), ausgeführt nach der Lokalisierung und vor den Krümmungsänderungen, wobei der Kreis ein Schmiegekreis an diesen anderen theoretischen Weg ist.

FIG. 1

FIG. 2

FIG. 3

EP 0 434 569 B1

FIG. 4

FIG. 5

FIG. 6

9